# EUROPÄISCHE PATENTSCHRIFT

(11) **EP 3 435 041 B1**
(45) Veröffentlichungstag und Bekanntmachung des Hinweises auf die Patenterteilung: **08.04.2020**
(21) Anmeldenummer: 18000573.8
(22) Anmeldetag: 03.07.2018
(51) Int. Cl.: G01F 1/66

(54) **MESSMODUL, MESSEINRICHTUNG UND VERFAHREN ZUR ERMITTLUNG EINER FLUIDGRÖSSE**
MEASURING MODULE, MEASUREMENT DEVICE AND METHOD FOR DETECTING A FLUID CHARACTERISTIC
MODULE DE MESURE , DISPOSITIF DE MESURE ET PROCÉDÉ PERMETTANT DE DÉTERMINER UNE CARACTÉRISTIQUE DE FLUIDE

(30) Priorität: 20.07.2017 DE 102017006909
(43) Veröffentlichungstag der Anmeldung: 30.01.2019
(73) Patentinhaber: Diehl Metering GmbH, 91522 Ansbach (DE)
(72) Erfinder: Ploß, Peter, DE - 95445 Bayreuth (DE); Mayle, Michael, DE - 91522 Ansbach (DE)
(74) Vertreter: Diehl Patentabteilung

(56) Entgegenhaltungen:
- WO-A1-2015/191775
- WO-A2-2015/134715
- DE-A1- 10 204 714
- JP-A- 2001 304 929
- US-A1- 2016 334 252

## Beschreibung

Die Erfindung betrifft ein Messmodul zur Ermittlung einer Fluidgröße. Daneben betrifft die Erfindung eine Messeinrichtung und ein Verfahren zur Ermittlung einer Fluidgröße.

Eine Erfassung von Fluidgrößen ist insbesondere im Bereich der Wasser- und Wärmezähler relevant. Es ist hierbei bekannt, dass es in vielen Anwendungsfällen regelmäßig erforderlich ist, entsprechende Zähler zu wechseln bzw. zu warten. Hierzu ist es üblicherweise erforderlich, den kompletten Zähler zu wechseln. Dies ist nachteilig, da hierfür die Leitung, an der der Zähler angeordnet ist, geöffnet werden muss, wodurch einerseits Fluid in die Umgebung austreten kann und andererseits darauf geachtet werden muss, die Leitung nicht zu verunreinigen.

Um einen Wechsel von Zählern zu erleichtern, ist es bekannt, sogenannte Messkapselzähler zu verwenden, bei denen ausschließlich eine Messkapsel gewechselt wird. Hierbei sind jedoch weiterhin Komponenten der Messkapsel beim Messbetrieb im Kontakt mit dem zu messenden Fluid, womit zwar durch die Nutzung von Messkapseln die Kosten für einen Zählerwechsel reduziert werden können, jedoch dennoch ein Öffnen der Fluidleitung erforderlich ist.

Ein Messmodul zur Ermittlung einer Fluidgröße ist im Dokument WO 2015/191775 A1 offenbart.

Der Erfindung liegt somit die Aufgabe zugrunde, ein Messmodul anzugeben, das demgegenüber einen leichteren Zählerwechsel ermöglicht.

Die Aufgabe wird erfindungsgemäß durch ein Messmodul zur Ermittlung einer Fluidgröße, die eine Eigenschaft eines in einem separat von dem Messmodul ausgebildeten Messrohr befindlichen, oder dieses durchströmenden Fluids und/oder von dessen Strömung betrifft, gelöst, wobei das Messmodul einen Grundkörper, eine Steuereinrichtung und einen ersten und einen zweiten voneinander beabstandet an oder in dem Grundkörper befestigten Schwingungswandler umfasst, wobei durch die Steuereinrichtung der erste und/oder der zweite Schwingungswandler ansteuerbar sind, um eine Schwingung einer oder einer jeweiligen Seitenwand des Messrohrs anzuregen, wenn eine oder eine jeweilige Kontaktfläche des Messmoduls direkt oder über eine Kopplungsschicht mit der oder der jeweiligen Seitenwand des Messrohrs gekoppelt ist, wobei die Schwingung der Seitenwand Kompressionsschwingungen des Fluids anregt, die über das Fluid zu dem jeweils anderen Schwingungswandler führbar und dort durch die Steuereinrichtung zur Ermittlung einer Messgröße erfassbar sind, wobei die Fluidgröße durch die Steuereinrichtung in Abhängigkeit der Messgröße ermittelbar ist.

Erfindungsgemäß wird vorgeschlagen, den Transport von Kompressionsschwingungen durch das Fluid zu nutzen, um Eigenschaften des Fluids zu ermitteln, wobei diese Schwingungen über ein separates Messmodul eingekoppelt bzw. nach dem Transport durch das Fluid erfasst werden. Wesentlicher Vorteil des erfindungsgemäßen Messmoduls gegenüber üblichen Ultraschallzählern ist es, dass das Messmodul gewechselt werden kann, ohne das Messrohr zu öffnen. Um dies zu erreichen können durch das Messmodul Schwingungen in die oder die jeweilige Seitenwand des Messrohrs eingekoppelt bzw. von dort ausgekoppelt werden. Das Fluid wird somit nicht direkt durch die Schwingungswandler angeregt, sondern es wird zunächst die oder die jeweilige Seitenwand des Messrohrs angeregt, die wiederum das Fluid zu Kompressionsschwingungen anregt, wonach die Kompressionsschwingungen des Fluids wiederum eine Seitenwand des Messrohrs anregen, wonach diese Schwingung der Seitenwand wieder durch das Messmodul erfasst werden können. Das Messrohr kann an einer Seitenwand des Messrohres angeordnet werden, um Schwingungen in diese Seitenwand einzukoppeln bzw. sie aus dieser Seitenwand auszukoppeln. Es kann jedoch auch mehrere Kontaktflächen umfassen, die an einer jeweiligen Seitenwand angreifen, um dort Schwingungen ein- und auszukoppeln. Insbesondere kann eine erste Kontaktfläche an eine erste Seitenwand angreifen und eine zweite Kontaktfläche an eine insbesondere zur ersten Seitenwand gegenüberliegende zweite Seitenwand.

Die Nutzung eines Schwingungstransports zur Erfassung von Fluideigenschaften ist prinzipiell im Stand der Technik bekannt. Beispielsweise werden in Ultraschallzählern häufig Laufzeitunterschiede einer Laufzeit einer Schwingung zwischen einem ersten und einem zweiten Ultraschallwandler und umgekehrt erfasst und hieraus kann eine Flussgeschwindigkeit bestimmt werden. Es können jedoch auch andere Messgrößen ausgewertet werden, um Fluideigenschaften zu bestimmen. Beispielsweise kann eine Signalamplitude am empfangenden Schwingungswandler ausgewertet, um eine Dämpfung der Schwingung beim Transport durch das Fluid zu erfassen. Amplituden können auch frequenzabhängig ausgewertet werden und es können absolute oder relative Amplituden bestimmter Spektralbereiche ausgewertet werden, um ein spektral unterschiedliches Dämpfungsverhalten im Fluid zu erfassen. Auch Phasenlagen unterschiedlicher Frequenzbänder können ausgewertet werden, um beispielsweise Informationen über die Dispersionsrelation im Fluid zu gewinnen. Alternativ oder ergänzend können auch Veränderungen der spektralen Zusammensetzung bzw. der Amplitude über die Zeit, beispielsweise innerhalb eines Messpulses, ausgewertet werden.

Durch Auswertung dieser Größen können als Fluidgrößen beispielsweise eine Durchflussgeschwindigkeit und/oder ein Durchflussvolumen und/oder eine Dichte, Temperatur und/oder Viskosität des Fluids ermittelt werden. Ergänzend oder alternativ kann beispielsweise eine Schallgeschwindigkeit im Fluid und/oder eine Zusammensetzung des Fluids, beispielsweise ein Mischungsverhältnis unterschiedlicher Komponenten, ermittelt werden. Verschiedene Ansätze zur Gewinnung dieser Fluidgrößen aus den vorangehend erläuterten Messgrößen sind im Stand der Technik bekannt und sollen daher nicht detailliert dargestellt werden. Beispielsweise können Zusammenhänge zwischen einer oder mehreren Messgrößen und der Fluidgröße empirisch ermittelt werden und es kann beispielsweise eine Look-Up-Tabelle oder eine entsprechende Formel genutzt werden, um die Fluidgröße zu ermitteln.

Als Schwingung der Seitenwand kann insbesondere eine durch die Seitenwand des Messrohrs geführte Welle, insbesondere eine Lamb-Welle, angeregt werden. Eine Anregung von Lamb-Wellen erfolgt, wenn die Wanddicke mit der Wellenlänge der Transversalwelle des Festkörpers vergleichbar ist. Derartige geführte Wellen sind kombinierte Druck- und Scherwellen und führen somit auch zu einer Auslenkung der Innenfläche der Seitenwand in Richtung des Fluids bzw. von dem Fluid weg. Durch diese Auslenkung werden wiederum Kompressionswellen im Fluid ausgelöst. Der gesamte Bereich, innerhalb dem sich die geführte Welle auf der Seitenwand ausbreitet, kann somit als Anregungsfläche für eine Kompressionsschwingung des Fluids dienen. Umgekehrt kann eine Kompressionsschwingung des Fluids in einem Wandbereich der Seitenwand entsprechende Lamb-Wellen anregen, die dann in der Seitenwand zu dem anderen Schwingungswandler geführt werden.

Bei den Schwingungswandlern kann es sich insbesondere um Ultraschallwandler handeln. Diese können beispielsweise mithilfe wenigstens eines piezoelektrischen Schwingelementes und einer entsprechenden Ansteuerung durch die Steuereinrichtung realisiert werden. Details zum Aufbau möglicher Schwingungswandler und insbesondere zur Möglichkeit modenselektiver Anregungen von geführten Wellen werden später noch detailliert erläutert.

Die Kontaktfläche kann unmittelbar auf einer äußeren Seitenfläche der Seitenwand aufliegen oder die äußere Seitenfläche und die Kontaktfläche können beide an der Kopplungsschicht anliegen. Es ist möglich, das Messmodul durch Klemmmittel auf die Seitenwand bzw. die Kopplungsschicht zu pressen. Es kann jedoch auch ausreichend sein, wenn das Messmodul auf der Seitenwand bzw. der Kopplungsschicht aufliegt.

Um eine Bedienung bzw. ein Ablesen des Messmoduls zu ermöglichen, umfasst das Messmodul vorzugsweise ein Display, das zur Anzeige von Messwerten und/oder Statusinformationen nutzbar sein kann, und/oder Bedienelemente zur Bedienung und/oder Konfiguration des Messmoduls.

Da das erfindungsgemäße Messmodul bereits zwei Schwingungswandler im definierten Abstand sowie eine zugehörige Steuereinrichtung aufweist, wird gegenüber der Anordnung einzelner Schwingwandler am Messrohr der Vorteil erreicht, dass die Messparameter bereits im Messmodul selbst weitgehend festgelegt sind, so dass trotz einfacher Installation eine hohe Messgenauigkeit erreicht werden kann. Wird zudem durch Vorsehen entsprechender Arretierungen, Ausnehmungen oder Ähnlichem am Messrohr eine definierte Lage des Messmoduls bezüglich des Messrohrs vorgegeben, ist es somit auch möglich, das Messmodul unabhängig von dem konkret genutzten Messrohr zu kalibrieren. Somit muss nicht das tatsächlich genutzte Gesamtsystem aus Messmodul und Messrohr kalibriert bzw. validiert werden, sondern es ist möglich, die einzelnen Komponenten unabhängig voneinander zu kalibrieren bzw. zu validieren, womit ein Austausch von Messmodulen auch dann problemlos möglich sein kann, wenn beispielsweise gewisse systembedingte oder gesetzliche Vorgaben für eine Messgenauigkeit eingehalten werden müssen.

Der Grundkörper ist oder umfasst eine ebene Schwingplatte, wobei die Kontaktfläche durch eine erste Seitenfläche der Schwingplatte gebildet ist, wobei der erste und zweite Schwingungswandler auf einer der ersten Seitenfläche gegenüberliegenden zweiten Seitenfläche der Schwingplatte angeordnet sind. Der erste und/oder zweite Schwingungswandler können direkt auf der Schwingplatte aufliegen. Die Schwingplatte kann beispielsweise aus Metall oder Kunststoff sein. Beispielsweise kann die Schwingplatte aus dem gleichen Material gebildet sein wie das Messrohr. Die Nutzung einer Schwingplatte ermöglicht es, die induzierten Schwingungen in der Schwingplatte zu führen, so dass eine Anregung der Seitenfläche im Wesentlichen in dem gesamten Ausbreitungsbereich der in der Schwingplatte geführten Welle erfolgen kann.

Die Schwingplatte kann ein zwischen dem ersten und dem zweiten Schwingungswandler angeordnetes Reflexionselement und/oder Dämpfelement aufweisen, durch das eine von dem ersten und/oder dem zweiten Schwingungswandler in die Schwingplatte eingekoppelte Welle reflektierbar und/oder streubar und/oder dämpfbar ist. Das Reflexionselement kann einteilig mit der Schwingplatte ausgebildet oder darauf befestigt sein. Beispielsweise kann das Reflexionselement dadurch bereitgestellt werden, dass die Schwingplatte im Bereich des Reflexionselements dicker oder dünner als in den umgebenden Bereichen ist, wobei sich die Dicke vorzugsweise sprunghaft ändert. Sprunghafte Änderungen der Dicke der Schwingplatte können zu plötzlichen Änderungen der Modenstruktur und somit zu Reflexionen der auf diese Grenze einlaufenden Welle führen. Durch ein Aufbringen eines Dämpfelements, das elastisch verformbar ist und eine hohe innere Reibung aufweist, kann die geführte Welle gezielt gedämpft werden. Beispielsweise kann ein insbesondere flächiges Dämpfelement aus Kunststoff, insbesondere aus einem Elastomer, auf die Schwingplatte aufgebracht, z. B. aufgeklebt, werden.

Das Reflexionselement erstreckt sich vorzugsweise über die gesamte Breite der Schwingplatte, so dass der erste und der zweite Schwingungswandler bezüglich einer Schwingungsführung durch die Schwingplatte voneinander entkoppelt werden können. Somit werden bei einer Anregung durch den ersten Schwingungswandler durch den zweiten Schwingungswandler im Wesentlichen nur Schwingungen empfangen, die über das Fluid geführt wurden, da über die Schwingplatte bzw. über die Seitenwand geführte Schwingungen zumindest weitgehend durch das Reflexionselement reflektiert oder gestreut werden. Um eine Ausbildung von stehenden Wellen zu vermeiden, ist es vorteilhaft, wenn zumindest eine dem jeweiligen Schwingungswandler zugewandten Seitenfläche des Reflexionselements gewinkelt zu der Verbindungsgerade zwischen den Schwingungswandlern steht. Beispielsweise kann das Reflexionselement eine Rautenform aufweisen, wobei den Schwingungswandlern jeweils Spitzen der Raute zugewandt sind.

Die Schwingplatte kann derart ausgebildet sein, dass durch eine Ansteuerung des ersten und/oder des zweiten Schwingungswandlers durch die Steuereinrichtung eine durch die Schwingplatte oder gemeinsam durch die Schwingplatte und die Seitenwand geführte Welle anregbar ist. Hierbei kann insbesondere eine Lamb-Welle anregbar sein. Das Material und/oder die Dicke der Schwingplatte können derart gewählt werden, dass für wenigstens eine zum Betrieb der Schwingungswandler genutzte Frequenz die Wellenlänge der resultierenden geführten Welle in der Schwingplatte und der Seitenwand gleich sind.

Der Grundkörper kann ein abgeschlossenes Innenvolumen begrenzen, in dem der erste und der zweite Schwingungswandler angeordnet sind. Das Innenvolumen wird insbesondere einseitig durch die Schwingplatte begrenzt. Durch die Anordnung in einem abgeschlossenen Innenvolumen sind die Schwingungswandler vor Umfeldeinflüssen geschützt. Zudem kann hierdurch ein Manipulationsschutz für das Messmodul erreicht werden, so dass beispielsweise Manipulationen einer einmal durchgeführten Kalibrierung für die Ermittlung der Fluidgröße nicht oder nur mit hohem Aufwand möglich sind.

Je nach Eigenschaften des genutzten Messrohres, nicht erfindungsgemäß, kann es vorteilhaft sein, statt einer Schwingplatte, an der die Schwingungswandler angeordnet sind, direkt bzw. über die Kopplungsschicht die Seitenwand des Messrohrs anzuregen. Daher kann wenigstens ein jeweiliger Abschnitt der oder der jeweiligen Kontaktfläche durch den ersten und/oder den zweiten Schwingungswandler oder ein mit dem jeweiligen Schwingungswandler gekoppeltes, separat von dem Grundkörper ausgebildetes Kopplungselement gebildet werden. Insbesondere kann ein Abschnitt der ersten Kontaktfläche durch den ersten Schwingungswandler und ein Abschnitt der zweiten Kontaktfläche durch den zweiten Schwingungswandler gebildet werden oder beide Schwingungswandler können separate Abschnitte der gleichen Kontaktfläche bilden. Die Schwingungswandler können beispielsweise seitlich oder mit einer der Kontaktfläche gegenüberliegenden Seitenfläche an dem Grundkörper befestigt sein. Vorzugsweise bilden der Grundkörper und die Schwingungswandler gemeinsam eine fugenlose Kontaktfläche.

Der erste und/oder der zweite Schwingungswandler können über ein jeweiliges zur Schwingungsentkopplung dienendes Entkopplungselement an dem Grundkörper befestigt sein. Dies ist besonders vorteilhaft, wenn eine direkte Anregung der Seitenwand des Messrohres mit dem Schwingungswandler bzw. durch ein mit diesem gekoppeltes Kopplungselement erfolgen soll. Der Grundkörper kann somit weitgehend von der Schwingung des ersten und/oder des zweiten Schwingungswandlers entkoppelt werden, womit beispielsweise eine Beeinflussung von Eigenmoden dieser Schwingungswandler durch den Grundkörper reduziert oder vermieden wird.

Das Entkopplungselement kann derart ausgebildet sein, dass ein Transmissionsgrad für die Schwingungen, die zur Anregung der Seitenwand dienen, kleiner als 0,5, insbesondere kleiner als 0,3 oder 0,1 ist. Niedrige Transmissionsgrade können einerseits durch starke Änderungen der Schallimpedanz zwischen dem Schwingelement und dem Entkopplungselement bzw. dem Entkopplungselement und dem Grundkörper erreicht werden. Andererseits kann als Material des Entkopplungselements ein Material mit starker Schwingungsdämpfung im relevanten Schwingungsbereich, beispielsweise ein Schaumstoff mit geschlossenen Poren, genutzt werden.

Die Schallimpedanzen des Schwingungswandlers und des Entkopplungselements bzw. des Entkopplungselements und des Grundkörpers können sich um einen Faktor von wenigstens 2 oder 5 oder 10 unterscheiden. Da der Reflexionskoeffizient sich als Quotient zwischen der Differenz und der Summe der Impedanzen berechnet, resultiert beispielsweise bei einem Faktor von 3 ein Reflexionskoeffizient von 0,5. Der Faktor zwischen den genannten Impedanzen kann maximal 20, 30 oder 50 sein. Hohe Unterschiede der Schallimpedanz können beispielsweise zwischen Metall und Kunststoff erreicht werden.

Wie bereits eingangs erläutert sollen durch den ersten bzw. zweiten Schwingungswandler vorzugsweise geführte Wellen in der Schwingplatte bzw. in der Seitenwand angeregt werden. Hierbei ist es vorteilhaft, wenn eine weitgehend modenreine Anregung erreicht werden kann. Die Dispersionsrelation von beispielsweise Lamb-Wellen weist Zweige bzw. Moden auf, weshalb bei fest vorgegebener Anregungsfrequenz unterschiedliche Wellenlängen der Lamb-Welle in der Schwingplatte bzw. der Seitenwand resultieren können. Da jedoch der Winkel, in dem die Kompressionsschwingungen in das Fluid abgestrahlt werden, von der Phasengeschwindigkeit der geführten Welle abhängt, die typischerweise für unterschiedliche Anregungsmoden bei gleicher Frequenz unterschiedlich ist, resultieren für verschiedene Moden verschiedene Ausbreitungspfade für die Kompressionsschwingungen im Fluid. Dies kann zwar potentiell dazu genutzt werden, zusätzliche Informationen über das Fluid zu gewinnen, häufig ist die Trennung der Signale, die aus verschiedenen Ausbreitungspfaden resultieren, jedoch sehr aufwendig. Zudem ist eine solche Trennung nicht in allen Anwendungsfällen zuverlässig möglich. Es ist daher vorteilhaft, wenn im erfindungsgemäßen Messmodul Schwingungswandler genutzt werden, die eine modenselektive Anregung von geführten Wellen in der Schwingplatte bzw. der Seitenwand ermöglichen. Hierzu sind verschiedene Ansätze denkbar, die im Folgenden diskutiert werden.

Durch den ersten und/oder den zweiten Schwingungswandler können die Schwingplatte und/oder die Seitenwand und/oder ein zwischen der Kontaktfläche oder der Seitenwand und dem jeweiligen Schwingungswandler angeordnetes Kontaktelement jeweils in mehreren voneinander beabstandeten Anregungsabschnitten anregbar sein. Hieraus resultiert letztlich eine örtlich inhomogene Anregung der Schwingplatte bzw. der Seitenwand. Dies kann gezielt genutzt werden, um bestimmte Schwingungsmoden der Seitenwand bzw. der Schwingplatte, insbesondere Schwingungsmoden von geführten Wellen, beispielsweise Lamb-Wellen, mit hoher Modenreinheit anzuregen. Dies kann erreicht werden, indem das genutzte Anregungsmuster auf eine Wellenlänge einer anzuregenden geführten Welle abgestimmt wird.

Um eine entsprechende Anregung zu erreichen, können der erste und/oder der zweite Schwingungswandler ein jeweiliges Schwingelement umfassen, das in mehreren voneinander beabstandeten Kontaktbereichen die Schwingplatte, die Seitenwand oder das Kontaktelement kontaktiert. Alternativ oder ergänzend kann das Kontaktelement in voneinander beabstandeten Kontaktbereichen die Seitenwand bzw. die Schwingplatte kontaktieren. Alternativ oder ergänzend können mehrere Schwingelemente genutzt werden, die voneinander beabstandet an der Schwingplatte, der Seitenwand oder dem Kontaktelement angeordnet sind.

Die Mitten der Anregungsabschnitte können einen Abstand voneinander aufweisen, der einem ganzzahligen Vielfachen der Wellenlänge der anzuregenden geführten Welle entspricht.

Beabstandete Anregungsbereiche können beispielsweise dadurch realisiert werden, dass ein Kontaktelement genutzt wird, das mehrere voneinander beabstandete Rippen aufweist, die vorzugsweise durch wenigstens einen Verbindungsabschnitt verbunden sind. Ein einzelnes Schwingelement kann sich über mehrere dieser Rippen erstrecken oder es können separate Schwingelemente für die einzelnen Rippen vorgesehen sein.

Voneinander beabstandete Anregungsabschnitte können auch dadurch realisiert werden, dass die Schwingplatte bzw. die Seitenwand eine Kontaktstruktur aufweist, die mehrere Vorsprünge und/oder wenigstens eine Ausnehmung aufweist, wobei das Schwingelement oder die Schwingelemente ausschließlich auf den Vorsprüngen bzw. außerhalb der Ausnehmungen aufliegt oder aufliegen.

Der erste und/oder der zweite Schwingungswandler können ebene, insbesondere piezoelektrische, Schwingungswandler sein, die parallel zu der Kontaktfläche angeordnet sind. Um hierbei eine Modenselektivität der Anregung zu erreichen, kann, wie obig erläutert, eine Anregung in beabstandeten Anregungsabschnitten erfolgen. Alternativ ist es beispielsweise möglich, dass der Schwingungswandler ein Interdigital-Transducer ist, der eine Elektrodenstruktur aufweist, bei der entgegengesetzt gepolte Elektroden fingerartig ineinander eingreifen. Durch eine Abstimmung der Abstände der ineinander eingreifenden Elektroden kann die Anregung von Schwingungen mit bestimmten Wellenlängen bevorzugt bzw. unterdrückt werden.

Eine modenselektive Anregung kann jedoch auch bei einfachen Elektroden bzw. Ansteuerungsstrukturen möglich sein. Beispielsweise kann der erste und/oder der zweite Schwingungswandler ein piezoelektrischer Schwingungswandler sein, der genau eine messrohrseitige Elektrode und genau eine messrohrabgewandte Elektrode aufweist, die an einander gegenüberliegenden Seitenflächen des jeweiligen Schwingungswandlers angeordnet sind. Alternativ kann der jeweilige Schwingungswandler mehrere messrohrseitige Elektroden und wenigstens eine messrohrabgewandte Elektrode oder mehrere messrohrabgewandte Elektroden und wenigstens eine messrohrseitige Elektrode aufweisen, wobei die Steuereinrichtung dazu eingerichtet ist, die Spannung zwischen den Elektroden derart vorzugeben, dass das Vorzeichen der Spannung zwischen einer jeweiligen messrohrseitigen Elektrode und einer jeweiligen messrohrabgewandten Elektrode für alle Paare aus messrohrseitigen und messrohrabgewandten Elektroden des jeweiligen Schwingungswandlers gleich ist. Insbesondere kann zwischen den messrohrseitigen Elektroden im Wesentlichen keine Spannung abfallen und/oder zwischen den messrohrabgewandten Elektroden im Wesentlichen keine Spannung abfallen. Eine modenselektive Anregung kann insbesondere dadurch erreicht werden, dass ein piezoelektrischer Schwingwandler genutzt wird, der auf die Modenstruktur der Seitenwand bzw. der Schwingplatte angepasst ist. Beispielsweise kann der Schwingungswandler derart ausgebildet sein, dass eine Eigenschwingung des Schwingungswandlers die gleiche Frequenz und die gleiche Wellenlänge aufweist, wie eine anzuregende geführte Welle, die durch die Seitenwand und/oder die Schwingplatte geführt wird. In diesem Fall kann eine inhomogene Anregung der Schwingplatte bzw. der Seitenwand zur im Wesentlichen modenreinen Anregung von Schwingungen durch Ausnutzungen der Eigenschwingung des Schwingungswandlers selbst erreicht werden.

Nicht erfindungsgemäß, ist eine weitere Möglichkeit zur Anregung von geführten Wellen der Schwingplatte bzw. der Seitenwand, wobei der erste und/oder der zweite Schwingungswandler jeweils ein durch die Steuereinrichtung ansteuerbares Schwingelement oder mehrere dieser Schwingelemente und einen Schwingkörper umfassen, wobei eine Seitenfläche oder Seitenflächen des Schwingkörpers, die das Schwingelement oder die Schwingelemente trägt oder tragen, gewinkelt zu der Kontaktfläche steht oder stehen. Das Schwingelement kann durch die Steuereinrichtungen zu Schwingungen anregbar sein. Beispielsweise kann das Schwingelement piezoelektrisch anregbar sein. Es kann ein keilförmiger Schwingkörper oder ein stabförmiger Schwingkörper genutzt werden. Das Schwingelement kann an einer der Kontaktfläche gegenüberliegenden Seitenfläche des Schwingkörpers angeordnet sein. Alternativ kann ein oder können vorzugsweise mehrere Schwingelemente an einer oder mehreren Seitenflächen des Schwingkörpers angeordnet sein, die eine Kante im Bereich der Kontaktfläche bzw. der Schwingplatte aufweisen. Durch solche Schwingelemente kann beispielsweise ein stabförmiger Schwingkörper in Biegeschwingungen versetzt werden, die genutzt werden können, um Oberflächenwellen in die Schwingplatte und/oder die Seitenwand einzukoppeln.

In einer bevorzugten Ausführungsform kann der Schwingkörper länglich sein und insbesondere eine blechartig flache Form aufweisen, wobei ein erster Abschnitt des Schwingkörpers auf dem Messrohr oder der Schwingplatte aufliegt, wobei der Schwingkörper zumindest abschnittsweise gekrümmt ist, so dass ein zweiter Abschnitt des Schwingkörpers gewinkelt von dem Messrohr bzw. der Schwingplatte absteht, wobei die Schwingelemente in dem zweiten Abschnitt an dem Schwingkörper angeordnet sind.

Neben dem erfindungsgemäßen Messmodul betrifft die Erfindung eine Messeinrichtung zur Ermittlung einer Fluidgröße, die eine Eigenschaft eines in einem Messrohr befindlichen oder dieses durchströmenden Fluids und/oder von dessen Strömung betrifft, wobei die Messeinrichtung ein erfindungsgemäßes Messmodul umfasst, und wobei die oder die jeweilige Kontaktfläche des Messmoduls direkt oder über eine Kopplungsschicht mit einer oder einer jeweiligen Seitenwand des Messrohrs der Messeinrichtung gekoppelt ist.

Die Kopplungsschicht kann durch ein zwischen dem Messmodul und der Seitenwand angeordnetes weiteres Fluid oder durch eine zwischen dem Messmodul und der Seitenwand angeordnete Folie gebildet werden. Als weiteres Fluid kann insbesondere ein Fluid mit hoher Viskosität, beispielsweise eine Paste, ein Gel oder ein Schmiermittel genutzt werden. Die Viskosität des weiteren Fluids kann beispielsweise durch Zusatz von Partikeln, insbesondere von Metallpartikeln, angepasst werden. Eine als Kopplungsschicht genutzte Folie kann insbesondere elastisch verformbar sein.

Alternativ oder ergänzend ist es möglich, dass die Messeinrichtung ein Klemmmittel umfasst, durch das die Kontaktfläche auf die Seitenwand gepresst wird. Beispielsweise kann ein Spannband um das Messmodul und das Messrohr geführt werden, das das Messmodul auf das Messrohr presst oder Ähnliches.

Die Seitenwand des Messrohrs kann eine Ausnehmung aufweisen, deren Bodenfläche direkt oder über die Kopplungsschicht mit der Kontaktfläche des Messmoduls gekoppelt ist. Die Form der Ausnehmung kann derart gewählt sein, dass das Messmodul formschlüssig in diese Ausnehmung eingreift und somit in einer definierten Position gehaltert wird. Hierdurch kann die relative Lage des Messmoduls zu dem Messrohr und somit auch die relative Lage der Schwingungswandler zu dem Messrohr festgelegt werden, womit auch nach einem Modulwechsel oder bei Nutzung des Messmoduls an einem anderen Messrohr reproduzierbare Messungen erreicht werden können.

Ergänzend betrifft die Erfindung ein Verfahren zur Ermittlung einer Fluidgröße, die eine Eigenschaft eines in einem separat von einem Messmodul ausgebildeten Messrohr befindlichen oder dieses durchströmenden Fluids und/oder von dessen Strömung betrifft, wobei das Messmodul einen Grundkörper und einen ersten und einen zweiten voneinander beabstandet an oder in den Grundkörper befestigten Schwingungswandler umfasst, wobei eine oder eine jeweilige Kontaktfläche des Messmoduls direkt oder über eine Kopplungsschicht mit einer oder einer jeweiligen Seitenwand des Messrohrs gekoppelt wird, wonach der erste und/oder der zweite Schwingungswandler angesteuert werden, um eine Schwingung der Seitenwand anzuregen, wobei durch die Schwingung der Seitenwand Kompressionsschwingungen des Fluids angeregt werden, die über das Fluid zu dem jeweils anderen Schwingungswandler geführt und dort durch die Steuereinrichtung zur Ermittlung einer Messgröße erfasst werden, wobei die Fluidgröße in Abhängigkeit der Messgröße ermittelt wird. Das erfindungsgemäße Verfahren kann mit jenen Merkmalen weitergebildet werden, die zum erfindungsgemäßen Messmodul bzw. zur erfindungsgemäßen Messeinrichtung erläutert wurden und umgekehrt.

Weitere Vorteile und Einzelheiten der vorliegenden Erfindung ergeben sich aus den folgenden Ausführungsbeispielen sowie den zugehörigen Zeichnungen. Hierbei zeigen schematisch:
- Fig. 1: eine geschnittene Ansicht eines Ausführungsbeispiels einer erfindungsgemäßen Messeinrichtung, die ein Ausführungsbeispiel eines erfindungsgemäßen Messmoduls umfasst, und
- Fig. 2 - 8: Detailansichten weiterer Ausführungsbeispiele erfindungsgemäßer Messeinrichtungen.

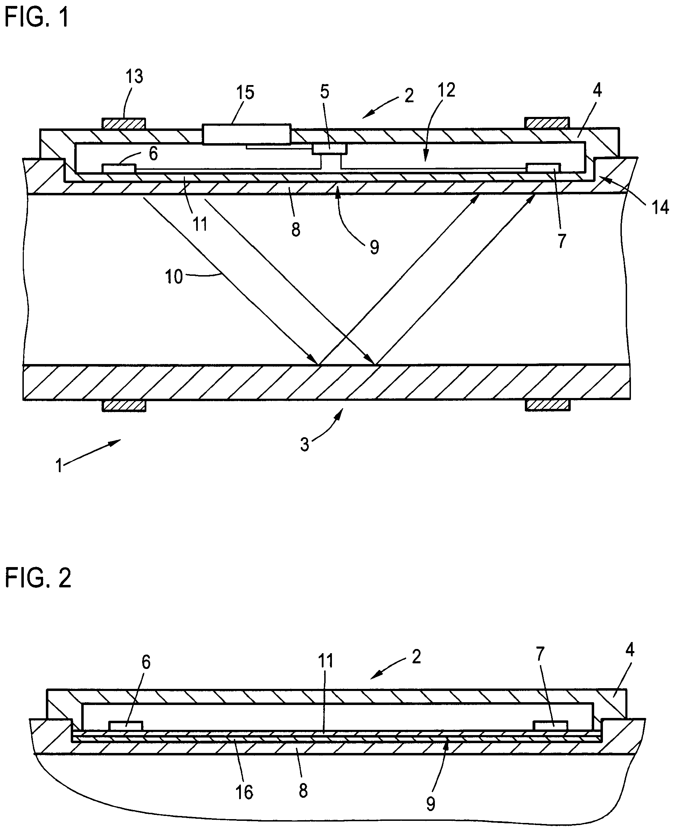

Fig. 1 zeigt eine Messeinrichtung 1 zur Ermittlung einer Fluidgröße, die eine Eigenschaft eines in einem Messrohr 3 befindlichen oder dieses durchströmenden Fluids und/oder von dessen Strömung betrifft. Im Folgenden wird dies am Beispiel der Messung einer Durchflussgeschwindigkeit durch Laufzeitmessungen von durch das Fluid gesendeten Ultraschallwellen beschrieben. Im Stand der Technik sind jedoch auch Ansätze bekannt, durch ein Senden von Ultraschallwellen durch ein Fluid beispielsweise die Dichte, die Temperatur, die Viskosität, die Schallgeschwindigkeit oder die Zusammensetzung des Fluids zu bestimmen. Da der Fokus hier jedoch auf dem mechanischen Aufbau der Messeinrichtung liegt, sollen diese Verfahren, die primär die Auswertung der Messdaten betreffen, nicht detailliert erläutert werden.

Die Messeinrichtung umfasst neben dem Messrohr 3 ein Messmodul 2, das separat von dem Messrohr 3 ausgebildet ist. Dies ermöglicht es beispielsweise, das Messmodul 2 bei Bedarf auszuwechseln, ohne das Messrohr 3 zu öffnen, womit beispielsweise ein Austritt des Fluids oder eine mögliche Verunreinigung des Rohrinnenraums vermieden werden kann. Dass Messmodul 2 umfasst einen Grundkörper 4, eine Steuereinrichtung 5 sowie einen ersten und zweiten voneinander beabstandet an dem Grundkörper 4 befestigten Schwingungswandler 6, 7. Der erste und zweite Schwingungswandler 6, 7 sind durch die Steuereinrichtung 5 ansteuerbar, um eine Schwingung der Seitenwand 8 des Messrohrs anzuregen, wenn eine Kontaktfläche 9 des Messmoduls 2 mit der Seitenwand 8 des Messrohrs 3 gekoppelt ist.

In dem gezeigten Ausführungsbeispiel erfolgt die Anregung der Seitenwand indirekt. Die Schwingungswandler 6, 7 sind an einer Schwingplatte 11 angeordnet, die einen Teil des Grundkörpers 4 bildet. Die Kontaktfläche 9 ist durch eine erste Seitenfläche der Schwingplatte 11 gebildet und die beiden Schwingungswandler 6, 7 sind auf der dieser gegenüberliegenden Seitenflächen angeordnet. Die Schwingungswandler 6, 7 können bei einer entsprechenden Ansteuerung durch die Steuereinrichtung 5 geführte Wellen, insbesondere Lamb-Wellen, in der Schwingplatte 11 anregen. Da es sich bei Lamb-Wellen um kombinierte Druck- und Scherwellen handelt, wird diese Schwingung auch auf die Seitenwand 8 übertragen und bei entsprechender Abstimmung der Komponenten aufeinander wird auch an der Seitenwand 8 eine Lamb-Welle angeregt.

Durch diese Schwingung der Seitenwand werden Kompressionsschwingungen des Fluids angeregt, wie dies durch die Pfeile 10 dargestellt ist. Eine Abstrahlung dieser Kompressionsschwingungen erfolgt im Wesentlichen in dem gesamten Bereich, innerhalb dem sich die geführte Welle in der Seitenwand 8 ausbreitet. Dies ist durch die seitliche Versetzung der Pfeile 10 dargestellt.

Die Kompressionswelle wird über das Fluid zu dem jeweils anderen Schwingungswandler 6, 7 geführt, wobei sie im Rahmen dessen an den Seitenwänden des Messrohrs, unter Umständen auch mehrfach, reflektiert werden kann. Das einlaufende Wellenpaket wird durch die Steuereinrichtung 5 über den jeweiligen nicht zum Senden genutzten Schwingungswandler 6, 7 erfasst, um eine Messgröße zu bestimmen. Im gezeigten Beispiel soll eine Durchflussgeschwindigkeit gemessen werden. Hierzu kann ein Laufzeitunterschied der Schwingung von dem Schwingungswandler 6 zu dem Schwingungswandler 7 und umgekehrt bestimmt werden und aus diesem die Strömungsgeschwindigkeit, wie es aus dem Bereich von Ultraschallzählern allgemein bekannt ist. Prinzipiell könnten jedoch auch andere Größen, beispielsweise die Amplitude des empfangenen Signals, dessen spektrale Zusammensetzung, wie beispielsweise absolute bzw. relative Amplituden verschiedener spektraler Bänder, und zeitliche Veränderungen des Signals, beispielsweise einer Phase der empfangenen Schwingung, der spektralen Zusammensetzung oder der Amplitude, ausgewertet werden.

Der Grundkörper 4 bildet ein abgeschlossenes Innenvolumen 12 des Messmoduls 2 aus, in dem die Schwingungswandler 6, 7 angeordnet sind. Dies dient zum einen dazu, die Schwingungswandler 6, 7 vor Verschmutzungen bzw. Beschädigungen zu schützen, zum anderen kann durch eine Kapselung der Schwingungswandler 6, 7 und der Steuereinrichtung 5 potentiell eine Manipulation des Messmoduls bzw. der Messeinrichtung verhindert oder erschwert werden, beispielsweise wenn die Messeinrichtung zu Abrechnungszwecken dient.

Um die Schwingungskopplung zwischen der Schwingplatte 11 und der Seitenwand 8 zu verbessern, wird das Messmodul 2 durch ein Klemmmittel 13, beispielsweise einem Klemmband, auf die Seitenwand 8 gepresst.

Um reproduzierbare Messungen auch bei einem Modulwechsel sicherzustellen, ist es vorteilhaft, die Lage des Messmoduls 2 bezüglich des Messrohrs 3 eindeutig festzulegen. Daher weist das Messrohr 3 eine Ausnehmung 14 auf, in die ein Abschnitt des Messmoduls 2 formschlüssig eingreift.

Zu Wartungs- und Ablesezwecken weist das Messmodul 2 ein Bedienpanel 15 auf, das beispielsweise eine Anzeigeeinrichtung und mehrere Bedienelemente umfassen kann.

In einigen Fällen kann es gewünscht sein, die Kopplung zwischen dem Messmodul 2 und der Seitenwand 8 zu verbessern. Daher kann, wie in Fig. 2 dargestellt ist, zwischen dem Messmodul 3 und der Seitenwand 8 eine Kopplungsschicht 16 vorgesehen sein. Die Kopplungsschicht 16 kann durch ein Fluid, insbesondere ein Fluid mit hoher Viskosität, wie beispielsweise eine Paste, ein Gel oder ein Schmiermittel, oder eine, insbesondere elastisch verformbare, Folie gebildet werden. Eine derartige Kopplungsschicht kann Unebenheiten der Seitenwand 8 bzw. der Kontaktfläche 9 ausgleichen und somit die Schwingungskopplung verbessern.

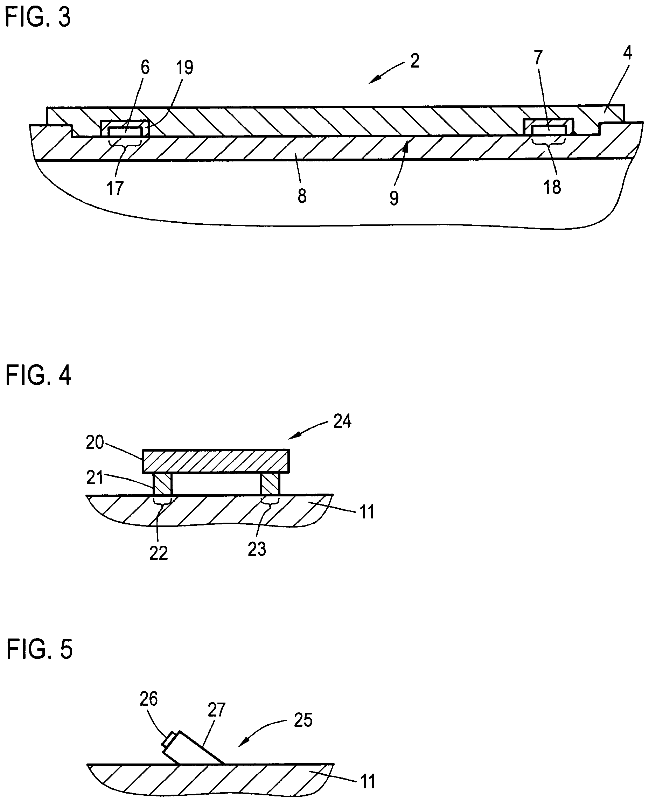

Je nach Material und Stärke der Seitenwand 8 kann es unter Umständen vorteilhaft sein, Schwingungen direkt vom Schwingungswandler 6, 7 in die Seitenwand 8 einzukoppeln, wie dies in Fig. 3 beispielhaft dargestellt ist. In diesem Fall wird ein jeweiliger Abschnitt 17, 18 der Kontaktfläche 9 durch den ersten bzw. zweiten Schwingungswandler 6, 7 gebildet. Alternativ wäre es möglich, zwischen dem jeweiligen Schwingungswandler 6, 7 und der Seitenwand zusätzlich ein separat von dem Grundkörper 4 ausgebildetes Kopplungselement vorzusehen, wie dies später noch mit Bezug auf Fig. 4 erläutert werden wird.

Bei einer direkten Kopplung des Schwingungswandlers 6, 7 an die Seitenwand 8 ist es häufig vorteilhaft, die Schwingungswandler 6, 7 von dem Grundkörper 4 zu entkoppeln. Daher sind die Schwingungswandler 6, 7 über ein jeweiliges Entkopplungselement 19 mit dem Grundkörper 4 gekoppelt, wobei der Transmissionsgrad der Schwingungen, die zur Anregung der Seitenwand 8 genutzt werden, beispielsweise kleiner als 0,3 oder 0,1 ist.

Um dies zu erreichen werden zwei Ansätze genutzt. Zum einen wird als Material des Entkopplungselements 19 ein Material genutzt, dessen Schallimpedanz deutlich unterschiedlich von der Schallimpedanz des Schwingungswandlers 6 und des Grundkörpers 4 ist. Beispielsweise kann als Grundkörper 4 ein Metall genutzt werden, der Schwingungswandler 6 kann weitgehend aus einer Keramik gebildet sein und das Entkopplungselement kann ein Kunststoff mit beispielsweise niedriger Schallimpedanz sein. Zum anderen wird ein Material mit starker Schalldämmung im relevanten Frequenzbereich genutzt. Beispielsweise kann ein geschäumter Kunststoff mit geschlossenen Poren genutzt werden.

Die Fig. 1 - 3 zeigen die Schwingungswandler 6, 7 jeweils schematisch als Block, der flach auf der Schwingplatte 11 bzw. auf der Seitenwand 8 aufliegt. Dies ist beispielsweise zutreffend, wenn ein Interdigitaltransducer als Schwingungswandler 6, 7 genutzt wird oder wenn beispielsweise ein Block aus Piezokeramik oder einem anderen piezoelektrischen Material genutzt wird, dessen Eigenschwingungsmoden derart auf die Eigenschwingungsmoden der Schwingplatte 11 bzw. der Seitenwand 8 abgestimmt sind, dass bei wenigstens einer Frequenz einer Eigenschwingung des Schwingungswandlers 6, 7 die gleiche Wellenlänge aufweist wie eine induzierte geführte Welle. Prinzipiell können jedoch auch andere Aufbauten der Schwingungswandler 6, 7 genutzt werden, mit denen unter gewissen Umständen eine bessere Modenselektivität erreicht werden kann. Beispiele hierfür sind in den Fig. 4 - 8 gezeigt. In den gezeigten Beispielen sind die Schwingungswandler auf eine Schwingplatte 11 aufgesetzt. Entsprechende Schwingungswandler können jedoch selbstverständlich auch so angeordnet werden, wie es in Fig. 3 gezeigt ist, das heißt bei einer Anordnung des Messmoduls 2 an dem Messrohr 3 unmittelbar auf der Seitenwand 8 des Messrohrs statt auf der Schwingplatte 1 aufliegen.

Der in Fig. 4 gezeigte Schwingungswandler 24 umfasst ein Schwingelement 20, beispielsweise einen Block aus Piezokeramik oder einem anderen piezoelektrischen Material, der über ein Kontaktelement 21 mit der Schwingplatte 11 gekoppelt ist. Das Kontaktelement hat eine kammartige Struktur, womit eine Anregung der Schwingplatte 11 im Wesentlichen ausschließlich in den Anregungsbereichen 22, 23 erfolgt. Durch Wahl eines entsprechenden Abstands zwischen den Anregungsbereichen 22, 23 kann eine Wellenlänge für die anzuregende geführte Welle vorgegeben werden, womit eine verbesserte Modenselektivität erreicht werden kann.

Statt ein separates Kontaktelement zu nutzen kann die in Fig. 4 gezeigte kammartige Struktur beispielsweise auch dadurch implementiert werden, dass an der Seitenwand 8 bzw. an der Schwingplatte 11 entsprechende kammartige Strukturen vorgesehen werden, auf denen das Schwingelement 20 aufliegt. Statt einem einzelnen Schwingelement könnte zudem für jeden Steg des Kontaktelements 21 bzw. für jeden Vorsprung ein separates Schwingelement genutzt werden.

Eine Modenselektivität kann auch erreicht werden, indem Schwingungen gewinkelt in die Schwingplatte 11 bzw. in die Seitenwand 8 eingekoppelt werden. Eine Möglichkeit hierfür ist in Fig. 5 dargestellt. Das Schwingelement 25 besteht hierbei aus einem Schwingelement 26, beispielsweise einem piezoelektrischen Schwingelement, und einem Schwingkörper 27. Der Schwingkörper weist eine verlängerte Keilform auf, wobei das Schwingelement 26 an der Seite des Schwingkörpers 27 angeordnet ist, die der Schwingplatte 11 bzw. der Kontaktfläche 9 gegenüberliegt. Die angeregte Mode hängt hierbei von dem Winkel zwischen dem Schwingkörper 27 und der Kontaktfläche 9 bzw. der Schwingplatte 11 ab.

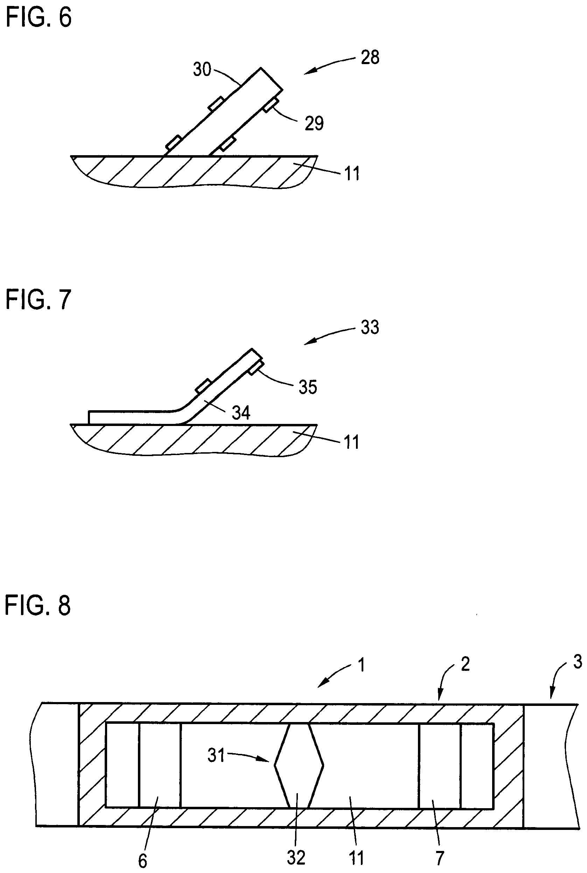

Fig. 6 zeigt einen ähnlichen Aufbau, wobei der Schwingkörper 30 des Schwingungswandlers 28 länger und stabförmig, also insbesondere rund, ist. Die Schwingelemente 29 sind an jener Seitenfläche des Schwingkörpers angeordnet, die sich bis zur Schwingplatte 11 bzw. bis zur Kontaktfläche 9 erstreckt. Sie sind gegenüberliegend und versetzt zueinander angeordnet, um Biegeschwingungen des Schwingkörpers 30 anzuregen, die als geführte Welle in die Schwingplatte 11 bzw. die Seitenwand 8 eingekoppelt werden können.

Auch Fig. 7 zeigt einen ähnlichen Aufbau, wobei der Schwingkörper 34 des Schwingungswandlers 33 eine blechartig flache Form aufweist. Ein erster Abschnitt des Schwingkörpers 34 liegt flach auf der Schwingplatte 11 auf. Durch eine abschnittsweise Krümmung des Schwingkörpers 34 steht ein weiterer Abschnitt des Schwingkörpers 34 gewinkelt von der Schwingplatte 11 ab, wobei die Schwingelemente 35 an diesem Abschnitt angeordnet sind.

In den bislang diskutierten Ausführungsbeispielen ist es prinzipiell möglich, dass eine geführte Welle in der Seitenwand 8 bzw. in der Schwingplatte 11 unmittelbar von dem Schwingungswandler 6 zu dem Schwingungswandler 7 oder umgekehrt geführt wird. Bei bestimmten Messgeometrien kann dieses unmittelbar empfangene Signal die Messung der durch das Fluid geführten Schwingung erschweren oder stören. Es kann daher gewünscht sein, den unmittelbaren Kopplungspfad zwischen den Schwingungswandlern 6 und 7 zu stören. Eine Möglichkeit hierfür ist in Fig. 8 dargestellt. Der Aufbau der in Fig. 8 gezeigten Messeinrichtung 1 ist abgesehen von den zusätzlichen Reflexionselementen 32 identisch zu der in Fig. 1 gezeigten Messeinrichtung, weshalb die gleichen Bezugszeichen genutzt werden, wobei eine andere Ansicht gezeigt ist. Die Schwingplatte 11 ist in dem Bereich eines rautenförmigen Reflexionselements 32 deutlich dicker ausgebildet, womit sich die Modenstruktur der Schwingplatte 11 in diesem Bereich ändert. Eine durch den Schwingungswandler 6 oder 7 angeregte Welle der Schwingplatte 11 wird daher an den Grenzflächen 31 des Reflexionselements 32 größtenteils reflektiert. Da die Grenzflächen 31 gegenüber einer Verbindungsgeraden der Schwingungswandler 6, 7 geneigt sind, wird die Ausbildung einer stehenden Welle vermieden.

Alternativ oder ergänzend könnte auch wenigstens ein nicht gezeigtes Dämpfelement, beispielsweise ein flächiges Kunststoffelement, zwischen den Schwingungswandlern 6, 7 auf der Schwingplatte angeordnet werden, um die geführte Welle zu bedämpfen.

### Bezugszeichenliste

- 1: Messeinrichtung
- 2: Messmodul
- 3: Messrohr
- 4: Grundkörper
- 5: Steuereinrichtung
- 6: Schwingungswandler
- 7: Schwingungswandler
- 8: Seitenwand
- 9: Kontaktfläche
- 10: Pfeil
- 11: Schwingplatte
- 12: Innenvolumen
- 13: Klemmmittel
- 14: Ausnehmung
- 15: Bedienpanel
- 16: Kopplungsschicht
- 17: Abschnitt
- 18: Abschnitt
- 19: Entkopplungselement
- 20: Schwingelement
- 21: Kontaktelement
- 22: Anregungsbereich
- 23: Anregungsbereich
- 24: Schwingungswandler
- 25: Schwingungswandler
- 26: Schwingelement
- 27: Schwingkörper
- 28: Schwingungswandler
- 29: Schwingelement
- 30: Schwingkörper
- 31: Grenzfläche
- 32: Reflexionselement
- 33: Schwingungswandler
- 34: Schwingkörper
- 35: Schwingelement

## Patentansprüche

1. Messmodul zur Ermittlung einer Fluidgröße, die eine Eigenschaft eines in einem separat von dem Messmodul (2) ausgebildeten Messrohr (3) befindlichen oder dieses durchströmenden Fluids und/oder von dessen Strömung betrifft, wobei das Messmodul (2) einen Grundkörper (4), eine Steuereinrichtung (5) und einen ersten und einen zweiten voneinander beabstandet an oder in dem Grundkörper befestigten Schwingungswandler (6, 7, 24, 25, 28) umfasst, wobei durch die Steuereinrichtung (5) der erste und/oder der zweite Schwingungswandler (6, 7, 24, 25, 28) ansteuerbar sind, um eine Schwingung einer oder einer jeweiligen Seitenwand (8) des Messrohrs (3) anzuregen, wenn eine oder eine jeweilige Kontaktfläche (9) des Messmoduls (2) direkt oder über eine Kopplungsschicht (16) mit der oder der jeweiligen Seitenwand (8) des Messrohrs (3) gekoppelt ist, wobei die Schwingung der Seitenwand (8) Kompressionsschwingungen des Fluids anregt, die über das Fluid zu dem jeweils anderen Schwingungswandler (6, 7, 24, 25, 28) führbar und dort durch die Steuereinrichtung (5) zur Ermittlung einer Messgröße erfassbar sind, wobei die Fluidgröße durch die Steuereinrichtung (5) in Abhängigkeit der Messgröße ermittelbar ist, **dadurch gekennzeichnet, dass** der Grundkörper (4) eine Schwingplatte (11) ist oder umfasst, wobei die Kontaktfläche (9) durch eine erste Seitenfläche der Schwingplatte (11) gebildet ist, wobei der erste und zweite Schwingungswandler (6, 7, 24, 25, 28) auf einer der ersten Seitenfläche gegenüberliegenden zweiten Seitenfläche der Schwingplatte (11) angeordnet sind.

2. Messmodul nach Anspruch 1, **dadurch gekennzeichnet, dass** die Schwingplatte (11) ein zwischen dem ersten und dem zweiten Schwingungswandler (6, 7, 24, 25, 28) angeordnetes Reflexionselement und/oder Dämpfelement (30) aufweist, durch das eine von dem ersten und/oder dem zweiten Schwingungswandler (6, 7, 24, 25, 28) in die Schwingplatte (11) eingekoppelte Welle reflektierbar und/oder streubar und/oder dämpfbar ist.

3. Messmodul nach Anspruch 1 oder 2, **dadurch gekennzeichnet, dass** die Schwingplatte (11) derart ausgebildet ist, dass durch eine Ansteuerung des ersten und/oder des zweiten Schwingungswandlers (6, 7, 24, 25, 28) durch die Steuereinrichtung (5) eine durch die Schwingplatte (11) oder gemeinsam durch die Schwingplatte (11) und die Seitenwand (8) geführte Welle anregbar ist.

4. Messmodul nach einem der vorangehenden Ansprüche, **dadurch gekennzeichnet, dass** der Grundkörper (4) ein abgeschlossenes Innenvolumen (12) begrenzt, in dem der erste und der zweite Schwingungswandler (6, 7, 24, 25, 28) angeordnet sind.

5. Messmodul nach einem der vorangehenden Ansprüche, **dadurch gekennzeichnet, dass** der erste und/oder der zweite Schwingungswandler (6, 7, 24, 25, 28) über ein jeweiliges zur Schwingungsentkopplung dienendes Entkopplungselement (19) an dem Grundkörper (4) befestigt sind.

6. Messmodul nach einem der vorangehenden Ansprüche, **dadurch gekennzeichnet, dass** durch den ersten und/oder den zweiten Schwingungswandler (6, 7, 24, 25, 28) die Schwingplatte (11) und/oder die Seitenwand (8) und/oder ein zwischen der Kontaktfläche (9) oder der Seitenwand (8) und dem jeweiligen Schwingungswandler (6, 7, 24, 25, 28) angeordnetes Kontaktelement (21) jeweils in mehreren voneinander beabstandeten Anregungsabschnitten anregbar sind.

7. Messmodul nach einem der vorangehenden Ansprüche, **dadurch gekennzeichnet, dass** der erste und/oder der zweite Schwingungswandler (6, 7, 24) ebene Schwingungswandler (6, 7, 24) sind, die parallel zu der Kontaktfläche (9) angeordnet sind.

8. Messmodul nach einem der Ansprüche 1 bis 6, **dadurch gekennzeichnet, dass** der erste und/oder der zweite Schwingungswandler (25, 28) jeweils ein durch die Steuereinrichtung ansteuerbares Schwingelement (26, 29) oder mehrere dieser Schwingelemente (26, 29) und einen Schwingkörper (27, 30) umfassen, wobei eine Seitenfläche oder Seitenflächen des Schwingkörpers (27, 30), die das Schwingelement oder die Schwingelemente (26, 29) trägt oder tragen, gewinkelt zu der Kontaktfläche (9) steht oder stehen.

9. Messeinrichtung zur Ermittlung einer Fluidgröße, die eine Eigenschaft eines in einem Messrohr (3) befindlichen oder dieses durchströmenden Fluids und/oder von dessen Strömung betrifft, **dadurch gekennzeichnet, dass** sie ein Messmodul (2) nach einem der vorangehenden Ansprüche umfasst, wobei die oder die jeweilige Kontaktfläche (9) des Messmoduls (2) direkt oder über eine Kopplungsschicht (16) mit einer oder einer jeweiligen Seitenwand (8) des Messrohrs (3) der Messeinrichtung (1) gekoppelt ist.

10. Messeinrichtung nach Anspruch 9, **dadurch gekennzeichnet, dass** die Kopplungsschicht (16) durch ein zwischen dem Messmodul (2) und der Seitenwand (8) angeordnetes weiteres Fluid oder durch eine zwischen dem Messmodul (2) und der Seitenwand (8) angeordnete Folie gebildet wird.

11. Messeinrichtung nach Anspruch 9 oder 10, **dadurch gekennzeichnet, dass** sie ein Klemmmittel (13) umfasst, durch das die Kontaktfläche (9) auf die Seitenwand (8) gepresst wird.

12. Messeinrichtung nach einem der Ansprüche 9 bis 11, **dadurch gekennzeichnet, dass** die Seitenwand (8) des Messrohres (3) eine Ausnehmung (14) aufweist, deren Bodenfläche direkt oder über die Kopplungsschicht (16) mit der Kontaktfläche (9) des Messmoduls (2) gekoppelt ist.

13. Verfahren zur Ermittlung einer Fluidgröße, die eine Eigenschaft eines in einem separat von einem Messmodul (2) ausgebildeten Messrohr (3) befindlichen oder dieses durchströmenden Fluids und/oder von dessen Strömung betrifft, wobei das Messmodul (2) einen Grundkörper (4) und einen ersten und einen zweiten voneinander beabstandet an oder in dem Grundkörper (4) befestigten Schwingungswandler (6, 7, 24, 25, 28) umfasst, wobei eine oder eine jeweilige Kontaktfläche (9) des Messmoduls (2) direkt oder über eine Kopplungsschicht (16) mit einer oder einer jeweiligen Seitenwand (8) des Messrohrs (3) gekoppelt wird, wonach der erste und/oder der zweite Schwingungswandler (6, 7, 24, 25, 28) angesteuert werden, um eine Schwingung der Seitenwand (8) anzuregen, wobei durch die Schwingung der Seitenwand (8) Kompressionsschwingungen des Fluids angeregt werden, die über das Fluid zu dem jeweils anderen Schwingungswandler (6, 7, 24, 25, 28) geführt und dort zur Ermittlung einer Messgröße erfasst werden, wobei die Fluidgröße in Abhängigkeit der Messgröße ermittelt wird, **dadurch gekennzeichnet, dass** ein Grundkörper (4) verwendet wird, der eine Schwingplatte (11) ist oder umfasst, wobei, die Kontaktfläche (9) durch eine erste Seitenfläche der Schwingplatte (11) gebildet wird, wobei der erste und zweite Schwingungswandler (6, 7, 24, 25, 28) auf einer der ersten Seitenflächen gegenüberliegenden zweiten Seitenfläche der Schwingplatte (11) angeordnet sind.

## Claims

1. Measurement module for determining a fluid variable relating to a property of a fluid which is situated in a measurement tube (3), formed separately from the measurement module (2), or which flows through said measurement tube, and/or of the flow of said fluid, wherein the measurement module (2) comprises a main body (4), a control device (5) and a first and a second vibration transducer (6, 7, 24, 25, 28), which vibration transducers are fastened on or in the main body so as to be spaced apart from one another, wherein, by way of the control device (5), the first and/or the second vibration transducer (6, 7, 24, 25, 28) are/is able to be actuated so as to induce vibration of a or a respective side wall (8) of the measurement tube (3) if a or a respective contact surface (9) of the measurement module (2) is coupled directly or via a coupling layer (16) to the or the respective side wall (8) of the measurement tube (3), wherein the vibration of the side wall (8) induces compressional oscillations of the fluid that are able to be passed via the fluid to the in each case other vibration transducer (6, 7, 24, 25, 28) and, there, are able to be detected by the control device (5) for determining a measurement variable, wherein the fluid variable is able to be determined by the control device (5) as a function of the measurement variable, **characterized in that** the main body (4) is or comprises a vibration plate (11), wherein the contact surface (9) is formed by a first side surface of the vibration plate (11), wherein the first and second vibration transducers (6, 7, 24, 25, 28) are arranged on a second side surface, opposite the first side surface, of the vibration plate (11).

2. Measurement module according to Claim 1, **characterized in that** the vibration plate (11) has a reflection element, and/or damping element (30), arranged between the first and second vibration transducers (6, 7, 24, 25, 28), by way of which a wave coupled into the vibration plate (11) from the first and/or the second vibration transducer (6, 7, 24, 25, 28) is able to be reflected and/or dispersed and/or damped.

3. Measurement module according to Claim 1 or 2, **characterized in that** the vibration plate (11) is formed such that, by way of actuation of the first and/or the second vibration transducer (6, 7, 24, 25, 28) by the control device (5), a wave passed through the vibration plate (11) or jointly through the vibration plate (11) and the side wall (8) is able to be induced.

4. Measurement module according to one of the preceding claims, **characterized in that** the main body (4) bounds a closed inner volume (12) in which the first and second vibration transducers (6, 7, 24, 25, 28) are arranged.

5. Measurement module according to one of the preceding claims, **characterized in that** the first and/or the second vibration transducer (6, 7, 24, 25, 28) are/is fastened on the main body (4) via a respective decoupling element (19) which serves for vibration decoupling.

6. Measurement module according to one of the preceding claims, **characterized in that**, by way of the first and/or the second vibration transducer (6, 7, 24, 25, 28), the vibration plate (11) and/or the side wall (8) and/or a contact element (21) arranged between the contact surface (9) or the side wall (8) and the respective vibration transducer (6, 7, 24, 25, 28) are/is in each case able to be subjected to excitation in multiple excitation sections which are spaced apart from one another.

7. Measurement module according to one of the preceding claims, **characterized in that** the first and/or the second vibration transducer (6, 7, 24) are/is a planar vibration transducer (6, 7 ,24) which is arranged parallel to the contact surface (9).

8. Measurement module according to one of Claims 1 to 6, **characterized in that** the first and/or the second vibration transducer (25, 28) comprise (s) in each case a vibration element (26, 29), which is able to be actuated by the control device, or multiple such vibration elements (26, 29) and a vibration body (27, 30), wherein a side surface or side surfaces of the vibration body (27, 30), which side surface(s) bears/bear the vibration element or the vibration elements (26, 29), is/are at an angle to the contact surface (9).

9. Measurement device for determining a fluid variable relating to a property of a fluid which is situated in a measurement tube (3) or which flows through said measurement tube, and/or of the flow of said fluid, **characterized in that** said measurement device comprises a measurement module (2) according to one of the preceding claims, wherein the or the respective contact surface (9) of the measurement module (2) is coupled directly or via a coupling layer (16) to a or a respective side wall (8) of the measurement tube (3) of the measurement device (1).

10. Measurement device according to Claim 9, **characterized in that** the coupling layer (16) is formed by a further fluid, which is arranged between the measurement module (2) and the side wall (8), or by a film, which is arranged between the measurement module (2) and the side wall (8).

11. Measurement device according to Claim 9 or 10, **characterized in that** it comprises a clamping means (13) by which the contact surface (9) is pressed onto the side wall (8).

12. Measurement device according to one of Claims 9 to 11, **characterized in that** the side wall (8) of the measurement tube (3) has a recess (14) whose base surface is coupled directly or via the coupling layer (16) to the contact surface (9) of the measurement module (2).

13. Method for determining a fluid variable relating to a property of a fluid which is situated in a measurement tube (3), formed separately from a measurement module (2), or which flows through said measurement tube, and/or of the flow of said fluid, wherein the measurement module (2) comprises a main body (4) and a first and a second vibration transducer (6, 7, 24, 25, 28), which vibration transducers are fastened on or in the main body (4) so as to be spaced apart from one another, wherein a or a respective contact surface (9) of the measurement module (2) is coupled directly or via a coupling layer (16) to a or a respective side wall (8) of the measurement tube (3), whereby the first and/or the second vibration transducer (6, 7, 24, 25, 28) are/is actuated so as to induce vibration of the side wall (8), wherein the vibration of the side wall (8) induces compressional oscillations of the fluid that are passed via the fluid to the in each case other vibration transducer (6, 7, 24, 25, 28) and, there, are detected for determining a measurement variable, wherein the fluid variable is determined as a function of the measurement variable, **characterized in that** use is made of a main body (4) which is or comprises a vibration plate (11), wherein the contact surface (9) is formed by a first side surface of the vibration plate (11), wherein the first and second vibration transducers (6, 7, 24, 25, 28) are arranged on a second side surface, opposite the first side surface, of the vibration plate (11).

## Revendications

1. Module de mesure permettant de déterminer une grandeur de fluide qui concerne une propriété d'un fluide se trouvant dans un tube de mesure (3) réalisé séparément du module de mesure (2) ou s'écoulant à travers ce tube de mesure et/ou de son écoulement, le module de mesure (2) comportant un corps de base (4), un dispositif de commande (5) et un premier et un deuxième transducteur de vibrations (6, 7, 24, 25, 28) fixés sur ou dans le corps de base de manière espacée l'un de l'autre, dans lequel le premier et/ou ou le deuxième transducteur de vibrations (6, 7, 24, 25, 28) peuvent être commandés au moyen du dispositif de commande (5) pour exciter une vibration d'une paroi latérale ou d'une paroi latérale respective (8) du tube de mesure (3) lorsqu'une surface de contact ou une surface de contact respective (9) du module de mesure (2) est couplée à la paroi latérale ou à la paroi latérale respective (8) du tube de mesure (3) directement ou par le biais d'une couche de couplage (16), dans lequel la vibration de la paroi latérale (8) excite des vibrations de compression du fluide, lesquelles peuvent être guidées par le biais du fluide jusqu'à l'autre transducteur de vibrations (6, 7, 24, 25, 28) respectif et peuvent y être détectées par le dispositif de commande (5) pour la détermination d'une grandeur de mesure, dans lequel la grandeur de fluide peut être déterminée par le biais du dispositif de commande (5) en fonction de la grandeur de mesure, **caractérisé en ce que** le corps de base (4) est ou comporte une plaque vibrante (11), la surface de contact (9) étant formée par une première surface latérale de la plaque vibrante (11), le premier et le deuxième transducteur de vibrations (6, 7, 24, 25, 28) étant disposés sur une deuxième surface latérale, opposée à la première surface latérale, de la plaque vibrante (11).

2. Module de mesure selon la revendication 1, **caractérisé en ce que** la plaque vibrante (11) comprend un élément de réflexion et/ou un élément d'amortissement (30) disposé(s) entre le premier et le deuxième transducteur de vibrations (6, 7, 24, 25, 28), élément au moyen duquel une onde injectée dans la plaque vibrante (11) par le premier et/ou le deuxième transducteur de vibrations (6, 7, 24, 25, 28) peut être réfléchie et/ou diffusée et/ou amortie.

3. Module de mesure selon la revendication 1 ou 2, **caractérisé en ce que** la plaque vibrante (11) est réalisée de telle sorte qu'une onde guidée à travers la plaque vibrante (11) ou conjointement à travers la plaque vibrante (11) et la paroi latérale (8) peut être excitée par une commande du premier et/ou du deuxième transducteur de vibrations (6, 7, 24, 25, 28) par le biais du dispositif de commande (5).

4. Module de mesure selon l'une des revendications précédentes, **caractérisé en ce que** le corps de base (4) délimite un volume interne fermé (12) dans lequel le premier et le deuxième transducteur de vibrations (6, 7, 24, 25, 28) sont disposés.

5. Module de mesure selon l'une des revendications précédentes, **caractérisé en ce que** le premier et/ou le deuxième transducteur de vibrations (6, 7, 24, 25, 28) sont fixés sur le corps de base (4) par le biais d'un élément de découplage (19) respectif servant au découplage des vibrations.

6. Module de mesure selon l'une des revendications précédentes, **caractérisé en ce que**, par le biais du premier et/ou du deuxième transducteur de vibrations (6, 7, 24, 25, 28), la plaque vibrante (11) et/ou la paroi latérale (8) et/ou un élément de contact (21) disposé entre la surface de contact (9) ou la paroi latérale (8) et le transducteur de vibrations respectif (6, 7, 24, 25, 28) peuvent être excités respectivement dans plusieurs parties d'excitation espacées les unes des autres.

7. Module de mesure selon l'une des revendications précédentes, **caractérisé en ce que** le premier et/ou le deuxième transducteur de vibrations (6, 7, 24) sont des transducteurs de vibrations plans (6, 7, 24) qui sont disposés parallèlement à la surface de contact (9).

8. Module de mesure selon l'une des revendications 1 à 6, **caractérisé en ce que** le premier et/ou le deuxième transducteur de vibrations (25, 28) comportent respectivement un élément vibrant (26, 29) pouvant être commandé par le biais du dispositif de commande ou plusieurs de ces éléments vibrants (26, 29) et un corps vibrant (27, 30), une surface latérale ou des surfaces latérales du corps vibrant (27, 30) qui porte ou portent l'élément vibrant ou les éléments vibrants (26, 29) étant inclinée(s) par rapport à la surface de contact (9).

9. Dispositif de mesure permettant de déterminer une grandeur de fluide qui concerne une propriété d'un fluide se trouvant dans un tube de mesure (3) ou s'écoulant à travers celui-ci et/ou de son écoulement, **caractérisé en ce qu'**il comporte un module de mesure (2) selon l'une des revendications précédentes, la surface de contact ou la surface de contact respective (9) du module de mesure (2) étant couplée à une paroi latérale ou à une paroi latérale respective (8) du tube de mesure (3) du dispositif de mesure (1) directement ou par le biais d'une couche de couplage (16).

10. Dispositif de mesure selon la revendication 9, **caractérisé en ce que** la couche de couplage (16) est formée par un autre fluide disposé entre le module de mesure (2) et la paroi latérale (8) ou par un film disposé entre le module de mesure (2) et la paroi latérale (8).

11. Dispositif de mesure selon la revendication 9 ou 10, **caractérisé en ce qu'**il comporte un moyen de serrage (13) au moyen duquel la surface de contact (9) est pressée sur la paroi latérale (8).

12. Dispositif de mesure selon l'une des revendications 9 à 11, **caractérisé en ce que** la paroi latérale (8) du tube de mesure (3) comprend un évidement (14) dont la surface de base est couplée à la surface de contact (9) du module de mesure (2) directement ou par le biais de la couche de couplage (16).

13. Procédé permettant de déterminer une grandeur de fluide qui concerne une propriété d'un fluide se trouvant dans un tube de mesure (3) réalisé séparément du module de mesure (2) ou s'écoulant à travers ce tube de mesure et/ou de son écoulement, dans lequel le module de mesure (2) comporte un corps de base (4) et un premier et un deuxième transducteur de vibrations (6, 7, 24, 25, 28) fixés sur ou dans le corps de base (4) de manière espacée l'un de l'autre, dans lequel une surface de contact ou une surface de contact respective (9) du module de mesure (2) est couplée à une paroi latérale ou à une paroi latérale respective (8) du tube de mesure (3) directement ou par le biais d'une couche de couplage (16), après quoi le premier et/ou le deuxième transducteur de vibrations (6, 7, 24, 25, 28) sont commandés pour exciter une vibration de la paroi latérale (8), dans lequel des vibrations de compression du fluide sont excitées par la vibration de la paroi latérale (8), lesquelles sont guidées par le biais du fluide jusqu'à l'autre transducteur de vibrations (6, 7, 24, 25, 28) respectif et y sont détectées pour la détermination d'une grandeur de mesure, dans lequel la grandeur de fluide est déterminée en fonction de la grandeur de mesure, **caractérisé en ce qu'**un corps de base (4) est utilisé, lequel est ou comporte une plaque vibrante (11), la surface de contact (9) étant formée par une première surface latérale de la plaque vibrante (11), le premier et le deuxième transducteur de vibrations (6, 7, 24, 25, 28) étant disposés sur une deuxième surface latérale, opposée à la première surface latérale, de la plaque vibrante (11).
